(19) Europäisches Patentamt
European Patent Office
Office européen des brevets

(11) **EP 4 160 854 A1**

(12) **EUROPÄISCHE PATENTANMELDUNG**

(43) Veröffentlichungstag:
05.04.2023 Patentblatt 2023/14

(51) Internationale Patentklassifikation (IPC):
**H02J 7/00** (2006.01)

(21) Anmeldenummer: 21199665.7

(22) Anmeldetag: **29.09.2021**

(52) Gemeinsame Patentklassifikation (CPC):
**H02J 7/00309; B25F 5/00; H02J 7/007192**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
• **Landesfeind, Johannes**
**82407 Wielenbach (DE)**
• **Braun, Philipp**
**87600 Kaufbeuren (DE)**
• **Schmid, Florian**
**9470 Buchs SG (CH)**

(74) Vertreter: **Hilti Aktiengesellschaft**
**Corporate Intellectual Property**
**Feldkircherstrasse 100**
**Postfach 333**
**9494 Schaan (LI)**

(54) **METHODE ZUR ÜBERWACHUNG EINES WIEDERAUFLADBAREN STROMSPEICHERS, STEUERVORRICHTUNG UND ELEKTRISCHE WERKZEUGMASCHINE**

(57) Die Erfindung betrifft eine Methode (1000) zur Überwachung eines wiederaufladbaren Stromspeichers (12) einer elektrischen Werkzeugmaschine (10), insbesondere einer elektrischen Handwerkzeugmaschine. Erfindungsgemäß wird eine Kerntemperatur (TC) des wiederaufladbaren Stromspeichers (12) unter Verwendung eines Temperaturmesswerts (TNTC) und einem Betriebszustandskennwert des Stromspeichers (12) geschätzt. Die Erfindung betrifft des Weiteren eine Steuervorrichtung (14) sowie eine elektrische Werkzeugmaschine (10).

Fig. 5

**Beschreibung**

Die Erfindung geht aus von einer Methode zur Überwachung eines wiederaufladbaren Stromspeichers einer elektrischen Werkzeugmaschine.

Elektrische Werkzeugmaschinen, insbesondere elektrische Handwerkzeugmaschinen, können oftmals kabellos betrieben werden. Dazu weisen sie in der Regel einen wiederaufladbaren Stromspeicher auf. Beim Entladen als auch beim Aufladen des Stromspeichers kann sich dieser erhitzen. Dabei können insbesondere in seinem Inneren, also in einem Kern des Stromspeichers, Temperaturen auftreten, die die Lebensdauer des Stromspeichers verkürzen. Insbesondere kann im Kern eine höhere Kerntemperatur herrschen als beispielsweise an einer Oberfläche des Stromspeichers.

Zwar ist eine direkte Messung der Kerntemperatur durch einen bis zum bzw. in den Kern reichenden Temperaturfühler grundsätzlich denkbar. Allerdings gestaltet sich ein nachträglicher Einbau eines solchen Temperaturfühlers in einen Stromspeicher zumindest als sehr aufwändig oder ist, zumindest in manchen Fällen, überhaupt nicht möglich.

Aufgabe der vorliegenden Erfindung ist es daher, eine Methode, eine Steuervorrichtung sowie eine elektrische Werkzeugmaschine anzubieten, die es auf einfache Weise ermöglichen, eine Kerntemperatur eines Stromspeichers der elektrischen Werkzeugmaschine zu ermitteln.

Gelöst wird die Aufgabe durch eine **Methode zur Überwachung eines wiederaufladbaren Stromspeichers** einer elektrischen Werkzeugmaschine, insbesondere einer elektrischen Handwerkzeugmaschine, wobei eine Kerntemperatur des wiederaufladbaren Stromspeichers unter Verwendung eines Temperaturmesswertes und einem Betriebszustandskennwert des Stromspeichers geschätzt wird.

Vorzugsweise entspricht die geschätzte Kerntemperatur einer tatsächlichen Kerntemperatur gemessen im Kern des Stromspeichers. Bei einem - beispielsweise - zylindrischen Stromspeicher kann die geschätzte Kerntemperatur einer Temperatur am Mittelpunkt des Stromspeichers entsprechen.

Dem erfindungsgemäßen Gedanken der Erfindung entsprechend wird eine Schätzung der Kerntemperatur auf Basis des Temperaturmesswerts und des Betriebszustandskennwertes vorgenommen. Der Temperaturmesswert kann dabei einer Temperatur an einem anderen, insbesondere einfacher erreichbaren Ort als dem Kern des Stromspeichers entsprechen.

Somit können zwei einfach verfügbare Daten zur Schätzung der Kerntemperatur verwendet werden. Durch Kombination wenigstens zweier Kenndaten, insbesondere zum zeitlichen Nutzungsverlauf des Stromspeichers, kann dabei die Kerntemperatur genauer geschätzt werden als dies beispielsweise unter Verwendung nur des Temperaturmesswertes möglich wäre.

Dabei kann der Temperaturmesswert einer Oberflächentemperatur des Stromspeichers entsprechen. Dazu lässt sich an der Oberfläche des Stromspeichers ein Temperaturfühler in der Regel besonders einfach anordnen. So braucht der Stromspeicher nicht zerstört oder beschädigt werden, um in sein Inneres vorzudringen. Letzteres wäre beispielsweise erforderlich, wenn die Kerntemperatur durch einen in der Nähe des Kerns oder im Kern angeordneten Temperaturfühlers direkt gemessen würde.

Der Betriebszustandskennwert kann einem Zellenstrom des Stromspeichers entsprechen. Insbesondere kann der Betriebszustandskennwert einem Entladestrom und / oder einem Ladestrom während des Entladens bzw. während des Aufladens des Stromspeichers entsprechen.

Günstig ist die Kenntnis des Zellenstroms auch deshalb, weil der Zellenstrom als Indikator für eine im Inneren des Stromspeichers während des Ladens beziehungsweise Entladens entstehende Wärmeleistung sein kann.

Der Zellenstrom des Stromspeichers ist ebenfalls in der Regel bei elektrischen Werkzeugmaschinen einfach bestimmbar. Oftmals ist dieser Messwert auch bereits bekannt. So wird der Zellenstrom oftmals auch gemessen, um andere Funktionalitäten der elektrischen Werkzeugmaschine, beispielsweise einen motorischen Antrieb, zu steuern. Ist noch kein Stromfühler zur Messung des Zellenstroms verfügbar, so kann ein solcher Stromfühler einfach in Reihe zu einem Anschluss des Stromspeichers geschaltet werden.

Bei einer besonders einfach ausführbaren Variante der erfindungsgemäßen Methode kann der Betriebszustandskennwert einer bivalenten Kenngröße entsprechen.

Beispielsweise kann der Betriebszustandskennwert einem Lastzustand der elektrischen Werkzeugmaschine, insbesondere ob sie ein- oder ausgeschaltet ist, entsprechen.

Dabei kann genutzt werden, dass die auf den Stromspeicher wirkende Last, beispielsweise der Zellenstrom, von einem solchen Einschalt- beziehungsweise Ausschaltzustand abhängt.

Bei einer besonders bevorzugten Variante der Methode erfolgt die Schätzung der Kerntemperatur unter Verwendung eines probabilistischen Modells.

Beispielsweise kann ein Kalmanfilter zur Schätzung der Kerntemperatur verwendet werden.

Ein Kalmanfilter kann darüber hinaus auch noch weitere Parameter eines den Stromspeicher beschreibenden Zustands modellieren. Der Zustand kann insbesondere Kennwerte umfassen, die sich auf den Wärmehaushalt des Stromspeichers beziehen und / oder mit diesem in Beziehung stehen. Beispielsweise kann der Zustand neben der Kerntemperatur auch eine Oberflächentemperatur umfassen. Denkbar ist es ferner, dass der Zustand auch eine Umgebungstemperatur einer Umgebung des Stromspeichers umfasst.

Bei einer weiteren Variante des erfindungsgemäßen Verfahrens kann vorgesehen sein, dass die Kerntemperatur oder eine Veränderung der Kerntemperatur entweder aus dem Temperaturmesswert oder aus dem Betriebszustandskennwert geschätzt wird, wenn die elektrische Werkzeugmaschine in Betrieb ist.

Mit anderen Worten kann zur Schätzung jeweils nur einer der wenigstens zwei Messwerte zur Schätzung der Kerntemperatur verwendet werden. Dem Gedanken der Erfindung entsprechend jedoch sollte vorzugsweise vorgesehen sein, dass im Laufe der Zeit, beispielsweise bei unterschiedlichen Betriebszuständen oder aufgrund anderer Bedingungen, insgesamt alle verfügbaren Messwerte zur Verwendung kommen können.

Die Auswahl des Messwertes zur Schätzung zu einem bestimmten Zeitpunkt kann dabei auf einer Heuristik beruhen.

Eine solche Variante der Methode kann den erforderlichen Rechenaufwand reduzieren. Eine Steuervorrichtung zur Umsetzung der Methode in dieser Variante benötigt daher verhältnismäßig wenig Rechenleistung und kann dementsprechend kostengünstig ausgeführt werden.

Denkbar ist insbesondere, dass eine wiederholte Schätzung der Kerntemperatur, beispielsweise in regelmäßigen Zeitintervallen, erfolgt.

Die Schätzung der Kerntemperatur kann auch bei unterschiedlichen Betriebszuständen erfolgen. Insbesondere ist denkbar, die Kerntemperatur zu schätzen im Falle, dass die elektrische Werkzeugmaschine in Betrieb ist und / oder dass ein Zellenstrom fließt, und / oder im Falle, dass die elektrische Werkzeugmaschine nicht in Betrieb ist und / oder kein Zellenstrom fließt.

In den Rahmen der Erfindung fällt des Weiteren eine **Steuervorrichtung zur Überwachung eines wiederaufladbaren Stromspeichers** einer elektrischen Werkzeugmaschine, insbesondere einer elektrischen Handwerkzeugmaschine, umfassend einen Temperaturfühler zur Messung eines Temperaturmesswerts eines zu überwachenden Stromspeichers und einen Betriebszustandssensor zur Erfassung eines Betriebszustandskennwerts des zu überwachenden Stromspeichers, wobei die Steuervorrichtung eingerichtet ist, den Temperaturmesswert vom Temperaturfühler abzufragen und den Betriebszustandskennwert vom Betriebszustandssensor abzufragen, und wobei die Steuervorrichtung eingerichtet ist, eine Kerntemperatur des zu überwachenden Stromspeichers mittels der vorangehend beschriebenen Methode zu schätzen.

Die Steuervorrichtung kann dazu eine Steuerelektronik, insbesondere eine Microcontrollereinheit, aufweisen. Sie kann auch als Teil einer anderen Steuerelektronik der elektrischen Werkzeugmaschine ausgebildet sein.

Die Steuervorrichtung kann eine verhältnismäßig präzise Schätzung der Kerntemperatur bieten, auch wenn der Temperaturfühler außerhalb des Kerns des Stromspeichers, beispielsweise an einer Oberfläche des Stromspeichers, angeordnet ist. Insbesondere kann die Kerntemperatur verhältnismäßig genau geschätzt werden, auch wenn lediglich eine Oberflächentemperatur als Temperaturmesswert gemessen wird.

Die Steuervorrichtung kann vergleichsweise einfach strukturiert aufgebaut und damit kostengünstig herstellbar sein. Dennoch kann sie verhältnismäßig präzise Schätzergebnisse ermöglichen, wenn der Betriebszustandssensor einen Zellenstrom des überwachten Stromspeichers erfasst.

Die Steuervorrichtung kann eingerichtet sein, dass wenn eine kritische Kerntemperatur erreicht oder überschritten wird und / oder eine Schätzung der Kerntemperatur die kritische Kerntemperatur erreicht oder überschreitet, der Zellenstrom reduziert wird.

Beispielsweise kann in diesem Fall die elektrische Werkzeugmaschine eingerichtet sein, ihre Arbeitsleistung zu reduzieren oder den Betrieb, zumindest temporär, einzustellen.

Die Steuervorrichtung kann auch eingerichtet sein, die geschätzte Kerntemperatur an eine weitere Elektronik zu übermitteln. Die weitere Elektronik kann beispielsweise eine Anzeigeelement umfassen. Somit kann auf dem Anzeigeelement ein Maß für die Kerntemperatur abbildbar sein. Die Steuervorrichtung kann auch ausgebildet sein, insbesondere bei Erreichen oder Überschreiten der kritischen Kerntemperatur, ein Alarmsignal auszulösen.

Des Weiteren fällt in den Rahmen der Erfindung eine **elektrische Werkzeugmaschine,** insbesondere eine elektrische Handwerkzeugmaschine, umfassend eine Steuervorrichtung der vorangehend beschriebenen Art, sowie einen wiederaufladbaren Stromspeicher.

Ihr Stromspeicher kann durch die Steuervorrichtung überwachbar und / oder steuerbar sein.

Die elektrische Werkzeugmaschine kann tragbar sein. Sie kann auch als Bauroboter, beispielsweise als Bohrbauroboter, ausgebildet sein. Sie kann zum Bohren, Meißeln, Schleifen und / oder Schneiden eingerichtet sein. Sie kann insbesondere Arbeiten im Hochbau- und/oder Tiefbauarbeit eingerichtet sein. Beispielsweise kann sie als Hammerbohrmaschine, als Diamantbohrmaschine, als Diamantsägemaschine, jeweils insbesondere zur Bearbeitung von Gestein wie z. B. Beton, ausgebildet sein.

Desgleichen ist es denkbar, im Falle eines Ladevorganges bei Erreichen oder Überschreiten der kritischen Kerntemperatur den Ladestrom zu reduzieren.

Der Stromspeicher kann Lithium-basiert ausgebildet sein. Insbesondere kann er ein Lithium-basiertes Speichermaterial aufweisen. Alternativ oder ergänzend kann der Stromspeicher auch ein organisches Speichermaterial aufweisen.

Der Stromspeicher kann eine oder mehrere Speicherzellen umfassen. Denkbar ist auch, dass der Stromspeicher wenigstens eine nicht-zylindrische Speicherzelle aufweist.

Desgleichen kann er mehrere Speicherzellen, beispielsweise nicht-zylindrische und / oder zylindrische Speicherzellen, aufweisen.

Seine Form kann insgesamt nicht-zylindrisch sein. In einem solchen Fall können oftmals besonders große Abweichungen zwischen der Oberflächentemperatur und der Kerntemperatur auftreten. Somit wäre eine alleinige Messung der Oberflächentemperatur zur Schätzung der Kerntemperatur verhältnismäßig ungenau, sodass sich hier der erfindungsgemäße Gedanken der Verwendung wenigstens zweier, insbesondere einfach erhältlicher, Messwerte besonders vorteilhaft auswirken kann.

Der Stromspeicher kann wenigstens eine manuell verformbare Speicherzelle aufweisen. Derartige Stromspeicher können besonders hohe Kapazitäten bieten, da sie selbst an an der elektrischen Werkzeugmaschine zur Verfügung stehende, geometrisch komplex geformte Bereiche anpassbar sind und dadurch auch derartige Bereiche ausfüllen oder zumindest nutzen können.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**

Fig. 1     eine elektrische Werkzeugmaschine,
Fig. 2     ein Flussdiagramm einer Methode zur Überwachung eines Stromspeichers;
Fig. 3     ein Diagramm der Veränderung der Kerntemperatur in Abhängigkeit von einem Zellenstrom;
Fig. 4     ein Diagramm der Veränderung einer Kerntemperatur in Abhängigkeit der Veränderung eines Temperaturmesswertes;
Fig. 5     eine schematische Darstellung eines Wärmeflussmodells;
Fig. 6     ein Kalmanfilter und
Fig. 7     Histogramme zu Abweichungen von Schätzungen der Kerntemperatur zu den jeweiligen tatsächlichen Kerntemperaturen verschiedener Stromspeicher.

In der nachfolgenden Beschreibung der Figuren werden zur Erleichterung des Verständnisses der Erfindung für gleiche oder sich funktional entsprechende Elemente jeweils die gleichen Bezugszeichen verwendet.

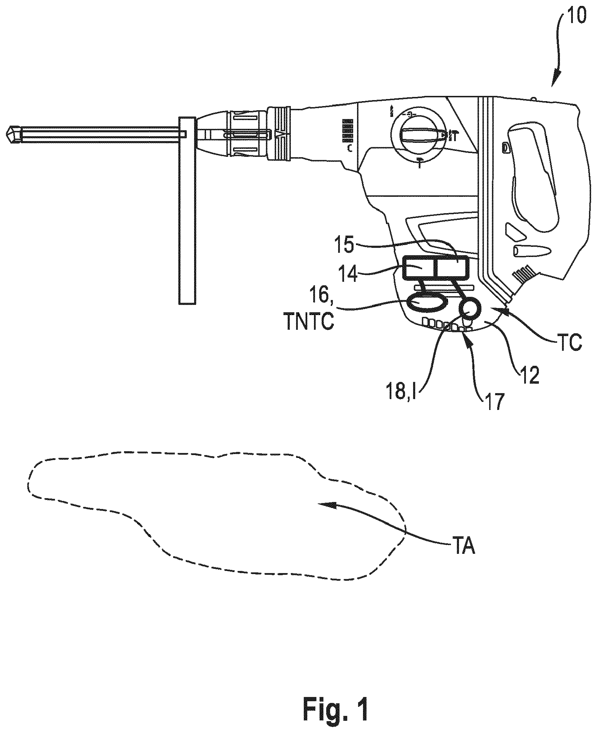

**Fig. 1** zeigt in einer schematischen Seitenansicht eine elektrische Werkzeugmaschine **10.** Die elektrische Werkzeugmaschine 10 ist als elektropneumatische Hammerbohrmaschine ausgebildet.

Die elektrische Werkzeugmaschine 10 ist kabellos betreibbar. Dazu weist sie einen wiederaufladbaren Stromspeicher **12** auf. Der Stromspeicher 12 umfasst einen Lithiumbasierten Stromspeicher. Vorzugsweise umfasst er wenigstens ein Pouchzellenelement.

Zellenströme, insbesondere Ladeströme und / oder Entladeströme, werden von einer in Fig. 1 lediglich schematisch dargestellten Steuervorrichtung **14** gesteuert. Die Steuervorrichtung 14 ist insbesondere eingerichtet, den Stromspeicher 12 zu überwachen. Die Steuervorrichtung 14 weist eine Microcontrollereinheit **15,** beispielsweise in Form eines Einplatinenrechners, auf

Sie weist ferner einen, in Fig. 1 ebenfalls lediglich schematisch dargestellten Temperaturfühler **16** auf, der an einer Oberfläche des Stromspeichers 12, insbesondere innerhalb eines Gehäuses **17** der elektrischen Werkzeugmaschine 10, angeordnet ist. Der Temperaturfühler 16 weist vorzugsweise einen NTC-Widerstand auf. Er kann somit als Temperaturmesswert **TNTC** eine Oberflächentemperatur des Stromspeichers 12 erfassen.

Weiter weist die Steuervorrichtung 14 einen Stromfühler **18** auf. Der Stromfühler 18 ist eingerichtet, einen Zellenstrom **I** des Stromspeichers 12 zu messen. Der Zellenstrom I ist ein Betriebszustandskennwert des Stromspeichers. Ein positiver Wert des Zellenstroms I entspricht einem Entladestrom und damit einem Entladezustand des Stromspeichers 12. Ein negativer Wert des Zellenstroms I entspricht einem Ladestrom und damit einem Ladezustand des Stromspeichers 12. Ein Wert von 0 oder von im Wesentlichen 0 des Zellenstroms I entspricht einem Ruhezustand, in dem der Stromspeicher 12 nicht genutzt wird. Dementsprechend ist der Stromfühler 18 ein Betriebszustandssensor zur Erfassung eines Betriebszustandskennwerts, hier dem Zellenstrom I, des zu überwachenden Stromspeichers 12.

Im Kern des Stromspeichers 12 herrscht eine Kerntemperatur **TC.** In einer schematisch angedeuteten Umgebung außerhalb der elektrischen Werkzeugmaschine 10 herrscht eine Umgebungstemperatur **TA.**

Die Steuervorrichtung 14 ist eingerichtet, die Kerntemperatur TC des Stromspeichers 12 zu schätzen. Dazu ist sie eingerichtet, den Temperaturmesswert TNTC vom Temperaturfühler 16 abzufragen und den Betriebszustandskennwert, also den Zellenstrom I, vom Betriebszustandssensor, also vom Stromfühler 18, abzufragen.

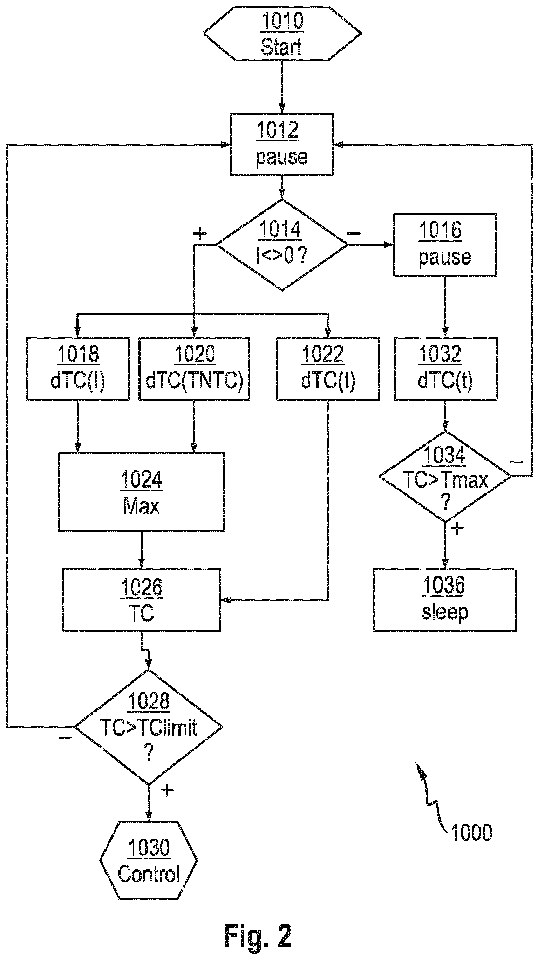

Die von der Steuervorrichtung 14 ausgeführte Methode zur Schätzung der Kerntemperatur TC wird im Folgenden anhand von Fig. 2 bis 7 näher erläutert.

Dabei wird zum einfacheren Verständnis der Methode soweit möglich auf die im Zusammenhang mit Fig. 1 eingeführten Bezugszeichen zurückgegriffen.

**Fig. 2** zeigt eine Methode **1000** zur Überwachung eines wiederaufladbaren Stromspeichers 12.

Ziel der Methode 1000 ist es, anhand des Temperaturmesswerts TNTC des Temperaturfühlers 16 und dem Zellenstrom I, beispielsweise gemessen durch den Stromfühler 18, die Kerntemperatur TC des Stromspeichers 12 zu schätzen. Die Methode kann auch die Umgebungstemperatur TA, die die Kerntemperatur TC beeinflussen kann, berücksichtigen und / oder schätzen.

Die Schätzung sollte regelmäßig aktualisiert werden, um einen dem Betrieb der elektrischen Werkzeugmaschine 10 entsprechenden zeitlichen Verlauf der Kerntemperatur TC abbilden zu können.

Die Methode kann beispielsweise durch Betätigen eines Betätigungselements der elektrischen Werkzeugmaschine mit einem Schritt **1010** gestartet werden.

So ist denkbar, dass die Methode 1000 in Gang gesetzt wird, wenn beispielsweise die elektrische Werkzeugmaschine 10 nach einer längeren Deaktivierungsphase wieder in Betrieb genommen wird.

In diesem Schritt 1010 können Parameter initialisiert werden. Insbesondere können die Schätzwerte für die Umgebungstemperatur TA und für die Kerntemperatur TC initialisiert werden.

Die Initialisierung dieser Parameter kann davon abhängig gemacht werden, ob es sich um einen erstmaligen Start der Methode 1000 beziehungsweise um eine Wiederaufnahme nach einer längeren Ruhepause handelt oder ob der vorangehende letztmalige Durchlauf der Methode 1000 vor kurzer Zeit erfolgt ist.

Im ersten Fall können die Schätzwerte für die Umgebungstemperatur TA und für die Kerntemperatur TC mit dem Temperaturmesswert TNTC des Temperaturfühlers 16 initialisiert werden.

Im anderen Fall können vorhergehende, alte Schätzwerte der Umgebungstemperatur TA und für die Kerntemperatur TC verwendet werden.

Insbesondere der Schätzwert für die Kerntemperatur TC kann in Verbindung mit der seit letztmaligem Durchlauf der Methode 1000 vergangenen, gegebenenfalls geschätzten, Zeit auf Basis einer exponentiellen Abklingkurve modifiziert werden.

Während eines kurzen Warteschritts **1012** kann die Kerntemperatur TC einer exponentiellen Abklingkurve entsprechend und unter Berücksichtigung der geschätzten Umgebungstemperatur TA aktualisiert werden.

In einem nachfolgenden Entscheidungsschritt **1014** wird abhängig davon, ob ein Zellenstrom I fließt oder ob kein Zellenstrom I fließt, die weitere Schätzung der Kerntemperatur TC entlang zweier verschiedener Pfade weiterverfolgt.

Im Falle, dass ein Zellenstrom I fließt, wird eine Veränderung der Kerntemperatur TC anhand von drei verschiedenen Komponenten **1018, 1020** und **1022** geschätzt.

Die Komponente 1018 schätzt dazu den Einfluss des Zellenstroms I. Die Komponente 1020 schätzt den Einfluss des Temperaturmesswerts TNTC, also entsprechend der Oberflächentemperatur, auf die Veränderung der Kerntemperatur TC.

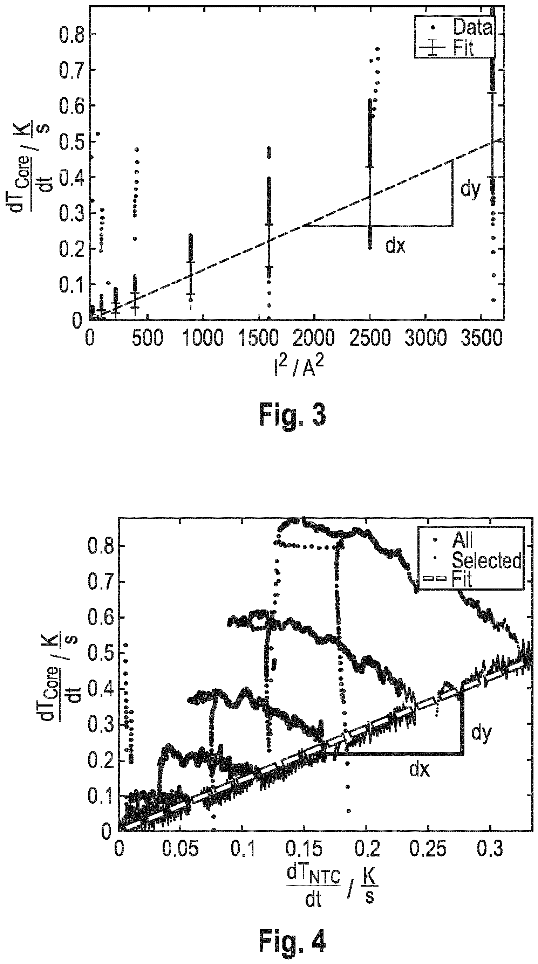

Wie anhand des Diagramms gemäß **Fig. 3** zu erkennen ist, lässt sich die Komponente 1018 der Veränderung der Kerntemperatur TC über eine quadratisch-lineare Abhängigkeit vom Zellenstrom I schätzen. Für einen Stromspeicher mit 5,2 Ah Kapazität wurde beispielsweise experimentell ein quadratisch-linearer Zusammenhang mit einer Steigung (in Fig. 3 markiert durch **dy** und **dx)** gleich 0,143 mK/(sA²), somit entsprechend

$$\frac{dTC}{dt} \approx 0.143 \, \frac{mK}{sA^2} * I^2$$

ermittelt. Die Steigung kann dabei für unterschiedliche Typen von Stromspeichern 12 individuell ermittelt werden. Die Steigung kann auch für unterschiedliche Umgebungstemperaturen TA ermittelt werden. Dies ist insbesondere dann sinnvoll, wenn Einsätze der elektrischen Werkzeugmaschine 10 unter besonderen Bedingungen, beispielsweise besonderer Hitze oder besonderer Kälte, zu erwarten sind.

Für die Komponente 1020 lässt sich, wie dem Diagramm gemäß **Fig. 4** zu entnehmen ist, die Veränderung der Kerntemperatur TC linear durch eine Veränderung des Temperaturmesswerts TNTC annähern.

Für den vorangehend beispielhaft genannten Stromspeicher 12 mit 5,2 Ah kann beispielsweise ein linearer Zusammenhang mit einer Steigerung dy/dx gleich 1,37 angenommen werden. Mit anderen Worten erwärmt sich die Kerntemperatur TC rund 1,4 mal schneller als der die Oberflächentemperatur messende Temperaturfühler 16. Experimentell ergab sich somit:

$$\frac{dTC}{dt} \approx 1.37 \frac{dTNTC}{dt}$$

Als dritter Effekt während eines Stromflusses berücksichtigt die Komponente 1022 eine Abkühlung des Kerns durch abfließende Wärme. Diese Abkühlung kann beispielsweise als exponentiell abklingende Kurve mit wenigstens einer Zeitkonstante modelliert werden. Vorzugsweise können zwei Zeitkonstanten berücksichtigt werden, beispielsweise eine Zeitkonstante für ein lokale Abkühlung $TL_{Cooldown}$ sowie eine weitere Zeitkonstante für eine Abkühlung $TA_{Cooldown}$ über einen längeren Zeitraum und vorzugsweise bis auf die Umgebungstemperatur TA herab.

Für beispielsweise

$$TC(t) = T^A_{Cooldown}(t) + T^L_{Cooldown}(t) + TA(t = 0)$$

mit

$$T^A_{Cooldown}(t) = (TC(t = 0) - TA(t = 0) - TL(t = 0)) * e^{-TauA*t},$$

$$T^L_{Cooldown}(t) = TL(t = 0) * e^{-TauL*t}$$

und

$$TL(t = 0) = f(TC(t = 0) - TNTC(t = 0))$$

und der Zeit t als Zeitdauer seit einer letzten Abschaltung der elektrischen Werkzeugmaschine beziehungsweise seit einem allerersten Start des Verfahrens sowie mit TC(t=0) und TA(t=0) jeweils, soweit verfügbar, als Werte unmittelbar vor der letzten Abschaltung oder anderenfalls TNTC(t=0) entsprechend, konnten für den oben genannten Stromspeicher 12 mit 5.2 Ah Kapazität Modellparameter zu

$$TauA \approx 0{,}48\frac{1}{s},$$

$$TauL \approx 6{,}05 \frac{1}{s}$$

und

$$f \approx 0{,}6256$$

experimentell ermittelt werden.

Im Sinne einer Heuristik wird in einem Auswahlschritt **1024** der höhere der beiden sich aus den ersten beiden Komponenten 1018 und 1020 ergebende Temperaturwerte ausgewählt und mit der Schätzung der Abkühlung gemäß der Komponente 1022 in einem Schritt **1026** zusammengerechnet, um daraus eine Schätzung für die Kerntemperatur TC zu erhalten.

Wird dann in einem Entscheidungsschritt **1028** festgestellt, dass die geschätzte Kerntemperatur TC einen Grenzwert **TCLimit,** beispielsweise 85 °C, überschreitet, so werden Steuerungsmaßnahmen in einem Steuerungsschritt **1030** ergriffen.

Beispielsweise kann als eine solche Steuerungsmaßnahme zum Schutz vor Überhitzung die elektrische Werkzeugmaschine 10 deaktiviert werden. Die Deaktivierung kann entweder instantan oder gedämpft erfolgen. Im Falle, dass der Stromspeicher 12 aufgeladen wird, also insbesondere bei negativem Zellenstrom I, kann als Steuerungsmaßnahme der Ladestrom temporär unterbrochen werden.

Die Steuerungsmaßnahme gemäß dem Schritt 1030 kann sich über einen vordefinierten Zeitraum erstrecken. Nach Ablauf des vordefinierten Zeitraums kann sie wieder aufgehoben werden. Anschließend kann die Methode 1000 mit dem Schritt 1010 erneut gestartet werden.

Im anderen Fall des Entscheidungsschrittes 1014, das heißt, wenn kein Zellenstrom I fließt, verfolgt diese Variante der Methode 1000 einen weiteren Pfad zur Schätzung der Kerntemperatur TC.

Da in diesem Fall kein Zellenstrom I fließt, kann während einer kurzen Pause **1016** und einem nachfolgenden Schätzschritt **1032** die Veränderung der Kerntemperatur TC auf Basis einer Abklingkurve geschätzt werden. Dies kann analog zur Komponente 1022 erfolgen.

Gemäß einem Entscheidungsschritt **1034** werden Schätzungen gemäß dieser Abklingkurve durch Rückkehr zum Schritt 1012 so lange wiederholt, bis die Kerntemperatur TC eine vordefinierte Grenze **Tmax** erreicht. In diesem Falle wechselt die Methode 1000 in einen Ruhezustand gemäß einem Ruheschritt 1036. Sie kann dann zu einem späteren Zeitpunkt erneut mit dem Schritt 1010 wieder fortgeführt werden.

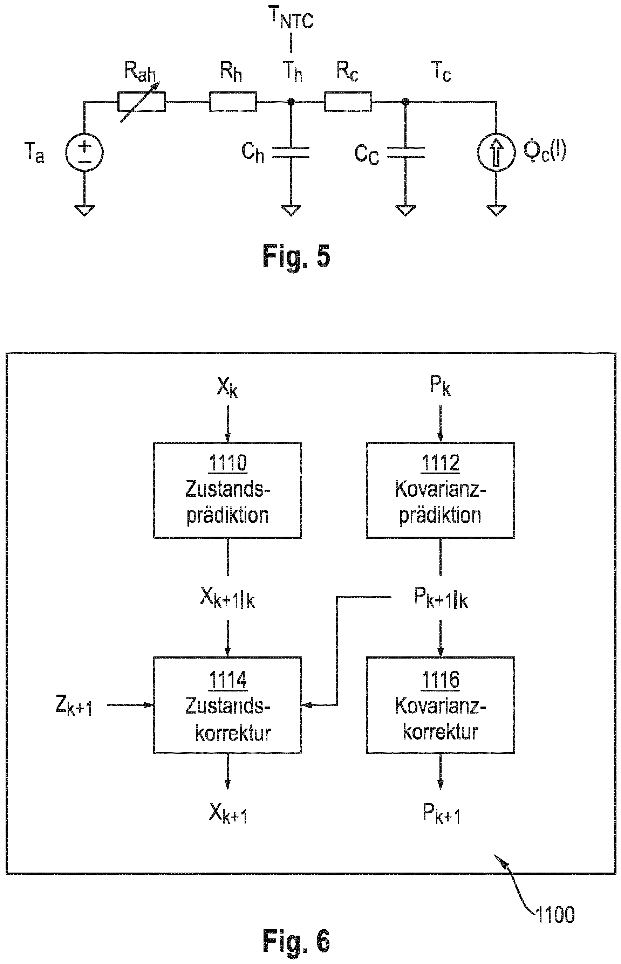

Anhand von **Fig. 5** und **Fig. 6** wird nun eine weitere Variante der Methode 1000 zur Überwachung der elektrischen Werkzeugmaschine 10 und insbesondere zur Schätzung der Kerntemperatur TC des Stromspeichers 12 erläutert.

Diese Variante beruht auf einem Wärmeflussmodell, das in Fig. 5 schematisch dargestellt ist.

Gemäß dem Wärmeflussmodell, das den Wärmefluss innerhalb des Stromspeichers 12 und zu seiner Umgebung hin modelliert, ist eine Wärmequelle vorgesehen, die im Innern des Stromspeichers 12 eine Wärmeleistung $\dot{Q}_c$ in Abhängigkeit vom Zellenstrom I freisetzt. Die Wärmequelle wird dabei als joulesche Wärmequelle angenommen. Ebenso wird ein konstanter elektrischer Widerstand des Stromspeichers 12 angenommen.

Im Kern bildet sich die Kerntemperatur TC.

Die Wärme in dem Stromspeicher 12 wird durch eine Wärmekapazität **CC** gepuffert.

Durch ein Zellenmaterial des Stromspeichers 12 hindurch kann Wärme entsprechend einem Wärmewiderstand **RC** fließen. An der Oberfläche, insbesondere an einem Gehäuse, des Stromspeichers 12 bildet sich somit eine Oberflächentemperatur **TH,** die dem Temperaturmesswert TNTC des Temperaturfühler 18 entspricht. Dem Gehäuse wird eine Wärmekapazität **CH** zugeordnet.

Durch das Gehäuse des Stromspeichers 12 hindurch kann ein Wärmeaustausch mit dem Wärmewiderstand **RH** sowie im weiteren äußeren Bereich mit einem Wärmewiderstand **RAH** bis zur Umgebung des Stromspeichers 12 erfolgen. Der Wärmewiderstand RAH ist in der Darstellung von Fig. 5 als variabel abgebildet, um auszudrücken, dass dieser Wärmewiderstand RAH durch Veränderung äußerer Bedingungen veränderlich sein kann. Beispielsweise kann er abhängig vom Ausmaß stattfindender Konvektion sein.

Der Umgebung wird ferner die Umgebungstemperatur TA zugeordnet.

Dieses Wärmemodell wird gemäß der nun vorgestellten Variante der Methode 1000 probabilistisch geschätzt.

Dabei sind zwei Untervarianten dieser Variante der Methode 1000 besonders bevorzugt, die sich in den ihnen zugrundeliegenden Modellgleichungen unterscheiden:

Einer ersten Untervariante der Methode 1000, im Folgenden als Kombinationsvariante bezeichnet, liegt folgende Modellgleichung zugrunde:

$$\frac{\mathrm{d}}{\mathrm{d}t}\begin{bmatrix} T_c \\ T_h \\ T_a \end{bmatrix} = \begin{bmatrix} -\dfrac{1}{C_c R_c} & \dfrac{1}{C_c R_c} & 0 \\ \dfrac{1}{C_h R_c} & -\dfrac{1}{C_h}\left(\dfrac{1}{R_c} + \dfrac{1}{R_h + R_{ah}}\right) & \dfrac{1}{C_h(R_h + R_{ah})} \\ 0 & 0 & 0 \end{bmatrix} \cdot \begin{bmatrix} T_c \\ T_h \\ T_a \end{bmatrix} + \begin{bmatrix} \dfrac{1}{C_c} \\ 0 \\ 0 \end{bmatrix} \cdot \dot{Q}_c$$

Diese Untervariante zeichnet sich dadurch aus, dass parallel sowohl die Oberflächentemperatur TH und damit der Temperaturmesswert TNTC als die Wärmeleistung $\dot{Q}_C$ und damit der Zellenstrom I unmittelbar berücksichtigt werden.

Einer zweiten Untervariante, im Folgenden als alternierende Variante bezeichnet, liegen folgende Modellgleichungen zugrunde:

$$\frac{d}{dt}\begin{bmatrix} T_c \\ T_h \\ T_a \end{bmatrix} = \begin{cases} \begin{bmatrix} -\dfrac{1}{C_c R_c} & \dfrac{1}{C_c R_c} & 0 \\ \dfrac{1}{C_h R_c} & -\dfrac{1}{C_h}\left(\dfrac{1}{R_c} + \dfrac{1}{R_h + R_{ah}}\right) & \dfrac{1}{C_h(R_h + R_{ah})} \\ 0 & 0 & 0 \end{bmatrix} \cdot \begin{bmatrix} T_c \\ T_h \\ T_a \end{bmatrix}, & \dot{Q}_c = 0 \\[4ex] \begin{bmatrix} 0 & 0 & 0 \\ \dfrac{1}{C_h R_c} & -\dfrac{1}{C_h}\left(\dfrac{1}{R_c} + \dfrac{1}{R_h + R_{ah}}\right) & \dfrac{1}{C_h(R_h + R_{ah})} \\ 0 & 0 & 0 \end{bmatrix} \cdot \begin{bmatrix} T_c \\ T_h \\ T_a \end{bmatrix}, & \dot{Q}_c \neq 0 \end{cases}$$

Die alternierende Variante benötigt somit lediglich einen Betriebszustandskennwert auf Nominalskalenniveau, in diesem Falle mit den Stufen Zellenstrom I fließt nicht (obere Teilgleichung) oder Zellenstrom I fließt nicht (untere Teilgleichung). Für den Fall von Entladungen entspricht dies in der Regel einer Fallunterscheidung zwischen einem Einschaltzustand und einem Ausschaltzustand der elektrischen Werkzeugmaschine 10. Sofern diese Fallunterscheidung anderweitig getroffen werden kann, ist somit bei der alternierenden Variante der Stromfühler 18 nicht erforderlich.

Messungen haben dennoch ergeben, dass sich trotz dieser Vereinfachung ausreichend präzise Ergebnisse erzielen lassen.

Zur Schätzung des zeitlichen Temperaturverlaufs der Kerntemperatur TC wird vorzugsweise ein Kalmanfilter **1100,** wie es schematisch in Fig. 6 dargestellt ist, verwendet.

Insbesondere werden Zustände **x** zu Zeitschritten **k,** im Folgenden x(k), geschätzt.

Der Zustand x weist wenigstens drei Komponenten auf, insbesondere die Kerntemperatur TC, die Oberflächentemperatur TH sowie die Umgebungstemperatur TA.

Zusätzlich wird eine Wahrscheinlichkeitskovarianzmatrix P mitgeschätzt.

Damit können im Rahmen einer Zustandsprädiktion **1110** aus dem Zustand x(k) ein Zustand x(k+1) sowie eine Wahrscheinlichkeitskovarianzmatrix P(k+1) prognostiziert werden.

Anschließend werden diese im Rahmen einer Zustandskorrektur **1114** mit Ist-Werten **z(k+1)** abgeglichen und aktualisiert. Parallel dazu erfolgt ein entsprechender Kovarianzkorrektur **1116.**

Im Ergebnis ergibt sich einer neuen Zustandsvektorx(k+1) und eine neue Wahrscheinlichkeitskovarianzmatrix P(k+1).

Anschließend kann ein erneuter Schätzdurchlauf, insbesondere beginnend mit der Zustandsprädiktion 1110, erfolgen.

Die sich insbesondere in der Wahrscheinlichkeitskovarianzmatrix P ausdrückenden Schätzunsicherheiten werden als normalverteilt angenommen. Die Umgebungstemperatur TA wird im zeitlichen Mittel als konstant angenommen, sie kann aber eine einem Random-Walk-Modell entsprechende Drift aufweisen.

Das Zeitintervall zwischen zwei Zeitschritten k und k+1 kann vorzugsweise zwischen 1 und 10s bei fließendem Zellenstrom I und zwischen 1 und 100 s bei nicht fließendem Zellenstrom I, also während einer Abkühlung, betragen.

Die für diese Modellgleichung benötigten Modellparameter können jeweils mittels einer geeigneten Messanordnung ermittelt werden.

Eine solche Messanordnung kann beispielsweise den Stromspeicher 12 umfassen, wobei dieser derart präpariert ist, dass ein weiterer Temperaturfühler direkt die Kerntemperatur TC misst.

Es können damit ein oder mehrere Zeitreihen der gemessenen Temperaturmesswerte TNTC und der gemessenen, tatsächlichen Kerntemperaturen TC erfasst werden. Dazu kann die elektrische Werkzeugmaschine 10 in unterschiedlichen Betriebszuständen betrieben werden, beispielsweise ein- und ausgeschaltet werden. Auch können eine Einschaltdauer und / oder eine Arbeitsleistung der elektrischen Werkzeugmaschine 10 variiert werden. Auch kann die Umgebungstemperatur TA beispielsweise über verschiedene Zeitreihen hinweg variiert werden.

Aus diesen Zeitreihen können dann mittels Optimierungsalgorithmen, beispielsweise mittels Minimale-Quadrate-Optimierung, jeweils benötigte Modellparameter zur Eichung der oben genannten Modellgleichungen geschätzt werden.

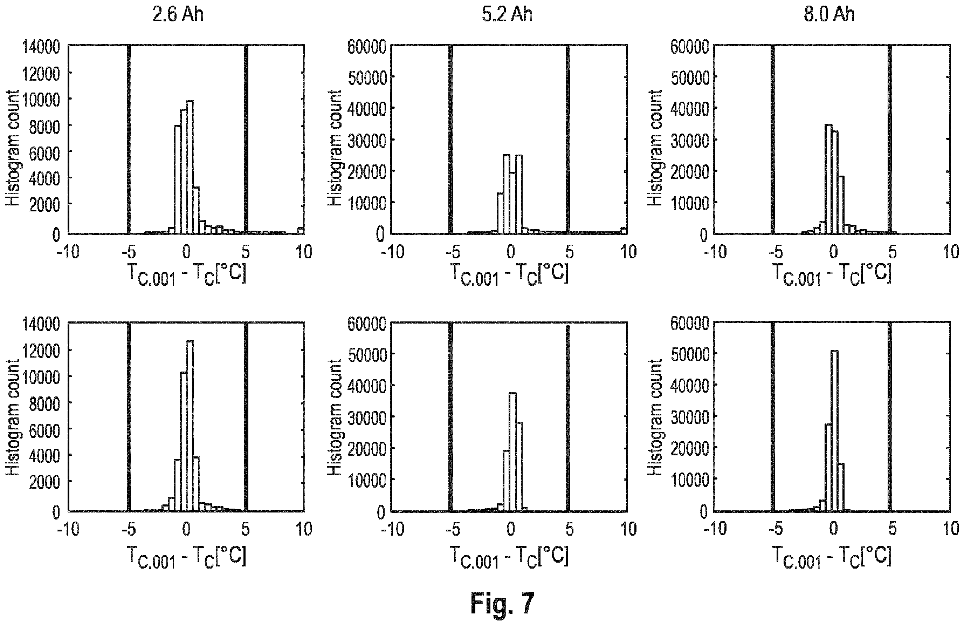

Abschließend zeigt **Fig. 7** mehrere Histogramme der Abweichungen zwischen der geschätzten Kerntemperatur TC und der jeweils tatsächlich gemessenen Kerntemperatur TC. Spaltenweise werden dabei Messwerte für unterschiedliche Stromspeicher 12, insbesondere von links nach rechts mit 2,6 Ah, 5,2 Ah und 8,0 Ah, dargestellt. In der oberen Zeile befinden sich die Histogramme zu den Ergebnissen der Untervariante einer kombinierten Schätzung der Kerntemperatur TC. In der unteren Zeile finden sich die Ergebnisse zur Untervariante einer alternierenden Schätzung der Kerntemperatur.

Mit vertikalen Balken ist ein Bereich von +/- 5K Temperaturdifferenz markiert.

Zu erkennen ist, dass die dargestellte Methode 1000, von wenigen Ausnahmen abgesehen, Schätzungen der Kerntemperatur TC mit Schätzfehlern von weniger als 5 K ermöglicht.

**Patentansprüche**

1.  **Methode (1000) zur Überwachung** eines wiederaufladbaren Stromspeichers (12) einer elektrischen Werkzeugmaschine (10), insbesondere einer elektrischen Handwerkzeugmaschine, wobei eine Kerntemperatur (TC) des wiederaufladbaren Stromspeichers (12) unter Verwendung eines Temperaturmesswerts (TNTC) und einem Betriebszustandskennwert des Stromspeichers (12) geschätzt wird.

2.  Methode nach dem vorhergehenden Anspruch, **dadurch gekennzeichnet, dass** der Temperaturmesswert (TNTC) einer Oberflächentemperatur (TH) des Stromspeichers (12) entspricht.

3.  Methode nach einem der vorhergehenden Ansprüche, **dadurch gekennzeichnet, dass** der Betriebszustandskennwert einem Zellenstrom (I) des Stromspeichers (12) entspricht.

4.  Methode nach einem der vorhergehenden Ansprüche, **dadurch gekennzeichnet, dass** ein Kalmanfilter (1100) zumindest zur Schätzung der Kerntemperatur (TC) verwendet wird.

5.  Methode nach einem der vorhergehenden Ansprüche, **dadurch gekennzeichnet, dass** die Kerntemperatur (TC) oder eine Veränderung der Kerntemperatur (TC) entweder aus dem Temperaturmesswert (TNTC) oder aus dem Betriebszustandskennwert geschätzt wird, wenn die elektrische Werkzeugmaschine (10) in Betrieb ist.

6.  **Steuervorrichtung** (14) zur Überwachung eines wiederaufladbaren Stromspeichers (12) einer elektrischen Werkzeugmaschine (10), insbesondere einer elektrischen Handwerkzeugmaschine, umfassend einen Temperaturfühler (16) zur Messung eines Temperaturmesswertes (TNTC) eines zu überwachenden Stromspeichers (12) und einen Betriebszustandssensor zur Erfassung eines Betriebszustandskennwerts des zu überwachenden Stromspeichers (12), wobei die Steuervorrichtung (14) eingerichtet ist, den Temperaturmesswert (TNTC) vom Temperaturfühler (16) abzufragen und den Betriebszustandskennwert vom Betriebszustandssensor abzufragen, und wobei die Steuervorrichtung (14) eingerichtet ist, eine Kerntemperatur (TC) des zu überwachenden Stromspeichers (12) mittels der Methode (1000) nach einem der vorhergehenden Ansprüche zu schätzen.

7.  Steuervorrichtung nach dem vorhergehenden Anspruch, **dadurch gekennzeichnet, dass** der Betriebszustandssensor einen Zellenstrom (I) des überwachten Stromspeichers (12) als Betriebszustandskennwert erfasst.

8.  Steuervorrichtung nach einem der Ansprüche 6 oder 7, **dadurch gekennzeichnet, dass** die Steuervorrichtung (14) eingerichtet ist, dass wenn die Kerntemperatur (TC) eine kritische Kerntemperatur (TClimit) erreicht oder überschreitet und / oder eine Schätzung der Kerntemperatur (TC) die kritische Kerntemperatur (TClimit) erreicht oder überschreitet, der Zellenstrom (I) reduziert wird.

9.  **Elektrische Werkzeugmaschine** (10), insbesondere elektrische Handwerkzeugmaschine, umfassend eine Steuervorrichtung (14) nach einem der Ansprüche 6 bis 8 sowie einen wiederaufladbaren Stromspeicher (12).

**Fig. 1**

Fig. 2

Fig. 3

Fig. 4

**Fig. 5**

**Fig. 6**

Fig. 7

Europäisches
Patentamt

European
Patent Office

Office européen
des brevets

## EUROPÄISCHER RECHERCHENBERICHT

Nummer der Anmeldung

**EP 21 19 9665**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2018 147680 A (SUMITOMO ELECTRIC INDUSTRIES) 20. September 2018 (2018-09-20) | 1-3,5-9 | INV. H02J7/00 |
| A | * Paragraphen [0050], [0072]; Anspruch 1; Abbildung 1 * | 4 | |
| X | ----- US 2013/027828 A1 (NODA MASAFUMI [JP] ET AL) 31. Januar 2013 (2013-01-31) * Paragraphen [0016]- [0018], [0021], [0137]; Anspruch 1; Abbildungen 7, 8 * ----- | 1-3,5-9 | |

RECHERCHIERTE
SACHGEBIETE (IPC)

H02J
B25H
B25F

Der vorliegende Recherchenbericht wurde für alle Patentansprüche erstellt

| Recherchenort | Abschlußdatum der Recherche | Prüfer |
|---|---|---|
| München | 16. März 2022 | Meyer, Andreas Hans |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 21 19 9665

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-03-2022

| Im Recherchenbericht angeführtes Patentdokument | Datum der Veröffentlichung | Mitglied(er) der Patentfamilie | Datum der Veröffentlichung |
|---|---|---|---|
| JP 2018147680 A | 20-09-2018 | JP 6787189 B2 | 18-11-2020 |
| | | JP 2018147680 A | 20-09-2018 |
| US 2013027828 A1 | 31-01-2013 | CN 102859823 A | 02-01-2013 |
| | | EP 2562894 A1 | 27-02-2013 |
| | | JP 5554622 B2 | 23-07-2014 |
| | | JP 2011229317 A | 10-11-2011 |
| | | RU 2012149451 A | 27-05-2014 |
| | | US 2013027828 A1 | 31-01-2013 |
| | | WO 2011132446 A1 | 27-10-2011 |

EPO FORM P0461

Für nähere Einzelheiten zu diesem Anhang : siehe Amtsblatt des Europäischen Patentamts, Nr.12/82